Europäisches Patentamt

European Patent Office

Office européen des brevets

(11) Veröffentlichungsnummer : **0 133 858**
**B1**

(12) # EUROPÄISCHE PATENTSCHRIFT

(45) Veröffentlichungstag der Patentschrift :
10.09.86

(21) Anmeldenummer : 83810358.8

(22) Anmeldetag : 12.08.83

(51) Int. Cl.⁴ : **H 02 K 15/02**, H 02 K 1/06,
B 21 D 28/22

(54) Verfahren und Vorrichtung zur Herstellung von aus Blechlamellen bestehenden Paketen für Magnetkerne von elektrischen Maschinen.

(43) Veröffentlichungstag der Anmeldung :
13.03.85 Patentblatt 85/11

(45) Bekanntmachung des Hinweises auf die Patenterteilung : 10.09.86 Patentblatt 86/37

(84) Benannte Vertragsstaaten :
DE FR GB IT

(56) Entgegenhaltungen :
DE-A- 2 708 017
DE-A- 2 915 290
US-A- 2 975 312

(73) Patentinhaber : Essa Fabrique de Machines S.A.

CH-2555 Brügg (CH)

(72) Erfinder : Guidi, Alfons
Föhrenweg 1
CH-2554 Meinisberg (CH)
Erfinder : Jost, Bernhard
Zälgli 38
CH-3315 Bätterkinden (CH)

(74) Vertreter : Velgo, Miroslav et al
Bovard AG Patentanwälte VSP Optingenstrasse 16
CH-3000 Bern 25 (CH)

EP 0 133 858 B1

### Beschreibung

Die Erfindung geht aus von einem Verfahren zur Herstellung von aus aufeinandergeschichteten Blechlamellen bestehenden Paketen für Magnetkerne von elektrischen Maschinen, in welchem aus einem Band identische Lamellen ausgestanzt und einseitig mit Vertiefungen und auf der anderen Seite mit mit den Vertiefungen übereinstimmenden und ihnen gegenüberliegenden Erhebungen versehen werden, welche Erhebungen in Form von mindestens zwei kreisrunden Warzen beim Zusammenbau jedes Paketes in die Vertiefungen eingepresst werden, wobei bei einer Lamelle pro Paket, die als Trennungslamelle dient, anstelle der Vertiefungen zylindrische Löcher gelocht werden, in welche die Warzen der benachbarten Lamelle eingreifen, sowie einer Vorrichtung zum Ausführen des Verfahrens, bestehend aus einem Folgewerkzeug mit Patrize und Matrize und mit mehreren Arbeitsstationen.

Derartige Pakete werden unter anderem in allen möglichen elektromagnetischen Apparaten gebraucht, wie z. B. als Rotoren, Statoren, Polschuhe, Kerne für Trafos usw.

Die Verbindung von Blechlamellen untereinander zu einem Paket ist bekannt. Es ist weiter bekannt; diese Verbindung durch einseitig aus dem Blech herausgepressten Lappen, die in auf der Gegenseite des Bleches vorgesehene, mit den Warzen übereinstimmende Vertiefungen eingepresst werden, zu sichern. Die Pakettrennung erfolgt durch eine Trennungslamelle, die keine Lappen, sondern durchgehend zylindrische Löcher aufweist, die gesteuert gelocht werden. In den herkömmlichen Verfahrensmethoden werden aus der Blechlamelle Lappen herausgeschert, die partiell mit der Lamelle verbunden bleiben. Dies bedingt relativ grosse Lappenabmessungen. Andererseits sind die Platzverhältnisse für günstige Anordnung der Verbindungslappen meistens beschränkt. Anstelle der einfachen, kreisrunden Warzen müssen deshalb häufig längliche, also aufwendigere Lappenformen vorgesehen werden. Nachteilig ist bei dieser Methode auch die vertikal gemessene Differenz zwischen den schrägen Lappenpartien und Blechdicke, welche ein spaltfreies Aufeinanderschichten der Lamellen verunmöglicht.

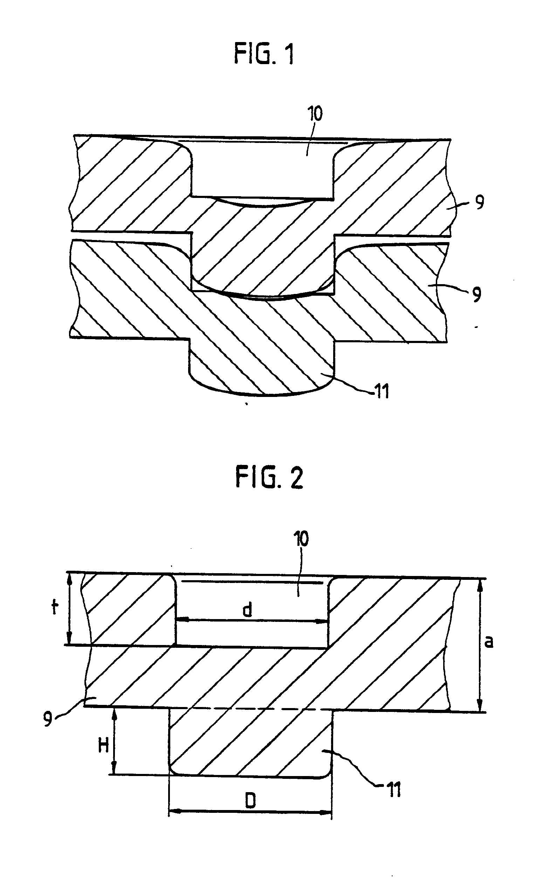

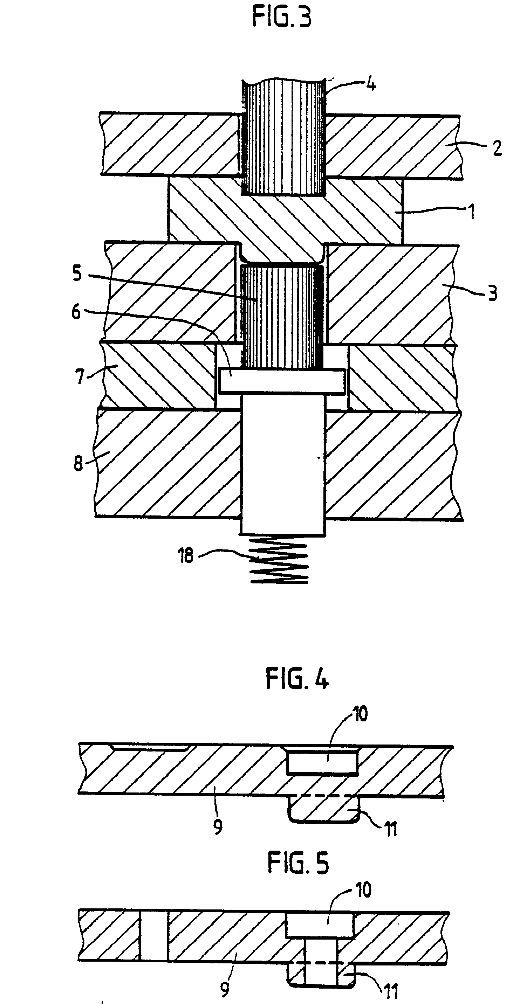

Zwecks Vermeidung der angedeuteten Nachteile wurde in der DE-OS 27 08 017 die Verbindung der Blechlamellen mit kreisförmigen, sacklochartige Vertiefungen und damit übereinstimmenden, kreisförmigen Buckeln (Warzen) vorgeschlagen. Dieses Verfahren hat aber aus weiter angeführten Gründen bisher keine praktische Bedeutung erlangt. Es wird hier ausgesagt, dass die Bleche durch Tiefziehen mit mindestens zwei kreisförmigen sacklochartigen Vertiefungen versehen werden. Durch Tiefziehen kann man aber nie eine Vertiefung bzw. einen Buckel (Warze) nach den Fig. 2 und 3 der DE-OS erreichen. Es muss davon ausgegangen werden, dass die in der DE-OS beschriebenen Verfahrensschritte auf den bekannten normalen stanzereitechnischen Gegebenheiten basieren, das heisst, dass die so ausgebildeten Warzen die Bedingungen des Paketierens der Blechlamelle nicht optimal erfüllen können. Bedingung beim Paketieren ist nämlich, dass die einzelnen Lamellen flach, also ohne Zwischenraum, aufeinanderliegen. Ausserdem muss die axiale Verbindungskraft gross genug sein, um das Handhaben der Pakete bei der Weiterverarbeitung zu gewährleisten. In der Natur des oben erwähnten Arbeitsvorganges begründet sind nun diese Warzen nach der DE-OS nach aussen bombiert und gegen die Mitte sogar verdickt. Dadurch wird die Warzenhöhe grösser als die Tiefe der Vertiefung. Beim Zusammenfügen der Lamellen können somit die einzelnen Lamellen nicht flach und ohne Zwischenraum aufeinanderliegen. An der Peripherie dieser Warzen ist eine deutliche Abrundung vorhanden und auch die Eingangskante zur Vertiefung ist abgeflacht (siehe Fig. 1). Hieraus resultiert eine erheblich reduzierte Kontaktfläche zwischen den Warzen und den entsprechenden Vertiefungen benachbarter Lamellen und damit eine ungenügende Verbindungskraft. Um eine hinreichende Verbindung der Lamellen zu erzielen, muss die Tiefe der Vertiefung mindestens 50 % der Blechdicke betragen. Mit zunehmender Eindringtiefe wächst aber bekanntlich während des Arbeitsvorganges die Rissgefahr im verbleibenden Materialquerschnitt zwischen Warzen-Austrittskante und Grundkante der Vertiefung. Mit den herkömmlichen, zur Lamellenherstellung eingesetzten Folgewerkzeugen, bei welchen die Abstreiferplatte im Abstand zirka doppelter Blechdicke von der Matrize abgestützt wird, damit eventuel aufsteigende Abfallbutzen keine unmittelbare Werkzeugschäden verursachen, lässt sich die Rissbildung kaum vermeiden, wodurch die Verbindung der Lamellen zusätzlich beeinträchtigt wird.

Der im Patentanspruch 1 angegebenen Erfindung liegt die Aufgabe zugrunde, ein Verfahren und eine Vorrichtung zur Herstellung von aus aufeinandergeschichteten Blechlamellen bestehenden Paketen vorzuschlagen bzw. zu schaffen, bei welchen die oben erwähnten Nachteile der Verfahren und der Vorrichtungen nach dem Stand der Technik behoben werden. Man soll eine viel grössere Arbeitsleistung mit einer einzigen Vorrichtung als bei dem Stand der Technik erzielen. Die Aufgabe wird bei einem Verfahren nach dem Oberbegriff des Patentanspruches 1 durch die Merkmale des kennzeichnenden Teiles des Patentanspruches 1 gelöst.

Mit Vorteil werden die Vertiefungen und die Warzen durch die Stempel für höchstens zehn Millisekunden weiter fliessgeprägt, nachdem die Gegenstempel ihre Endstellung erreicht haben. Die erfindungsgemässe Vorrichtung zum Ausführen des Verfahrens ist dadurch gekennnzeichnet, dass in der Prägestation der Vertiefungen und der Warzen mindestens zwei Stempel und zwei in der Matrize höhenverstellbare Gegenstempel vorgesehen sind, dass jeder Gegenstempel zum Festlegen seiner Endstellung an der Unterlage der Matrize mit einem Bund versehen ist, und dass in der Ausschneidestation der fertigen Lamellen unterhalb der Matrize Bremselemente eingebaut sind, die quer zu den Gegenstempelachsen verlaufen und den erforderlichen Widerstand bei der Verbindung der einzelnen fertigen Lamellen untereinander leisten.

Die Erfindung wird nachstehend anhand der Zeichnung beispielsweise näher erläutert. Es zeigen

Figur 1 eine Teilansicht im Schnitt von zwei mittels einer Warze und einer Vertiefung miteinander verbundenen Blechlamellen gemäss dem in der DE-OS-27 08 017 beschriebenen Verfahren,

Figur 2 eine Teilansicht im Schnitt einer Blechlamelle, die mit der Erfindungsgemässen Vertiefung und der erfindungsgemässen Warze versehen wurde,

Figur 3 eine schematische Teilansicht im Schnitt der Prägestation des erfindungsgemässen Folgewerkzeuges, in welcher im Stanzband eine Vertiefung und ein Warze fliessgeprägt werden,

Figur 4 eine Teilansicht im Schnitt einer Blechlamelle, die an der Sollstelle der Vertiefung und der Warze vorgeprägt wurde,

Figur 5 eine Teilansicht im Schnitt einer Blechlamelle, die an der Sollstelle der Vertiefung und der Warze vorgelocht wurde,

Figur 6 eine Ansicht im Schnitt eines Rotorpaketes mit einer Trennungslamelle,

Figur 7 eine Ansicht im Schnitt einer Trennungslamelle,

Figur 8 ein Streifenschema in Draufsicht bei der Herstellung eines Rotors und eines Stators aus einem Stanzband, und

Figur 9 eine Teilansicht im Schnitt der Präge- und der Ausschneidestation eines Folgewerkzeuges für die Herstellung von Polschuhen.

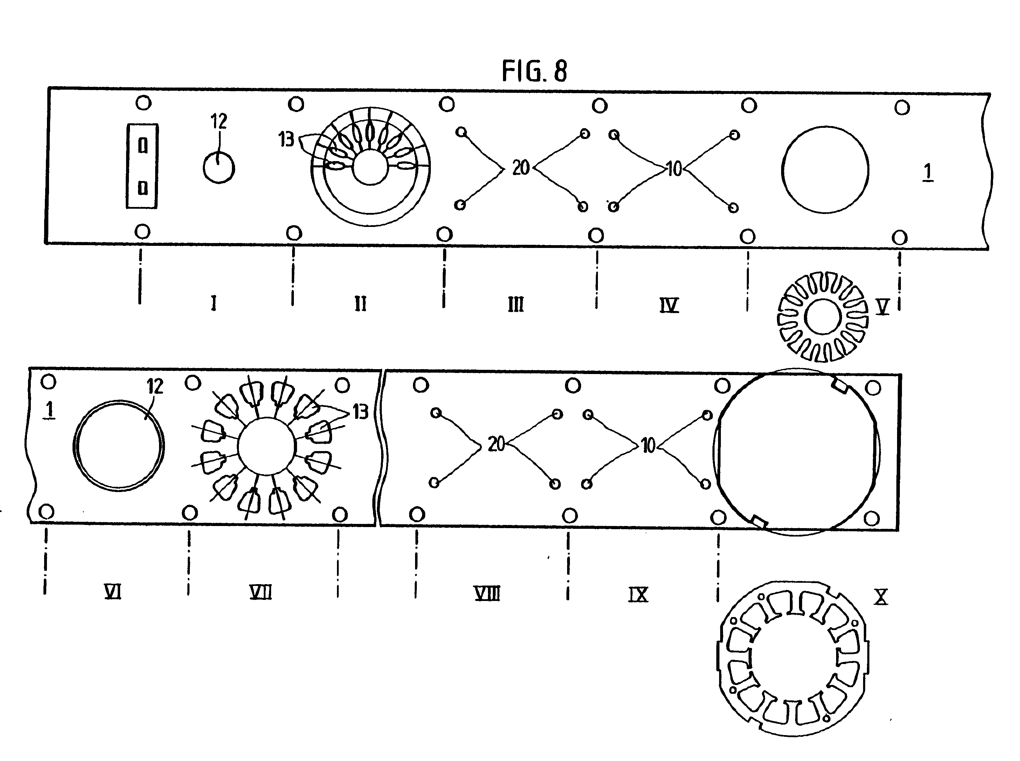

In einem Folgewerkzeug mit mehreren Arbeitsstationen werden z. B. Rotor- und Statorlamellen aus einem Stanzband 1 (siehe Fig. 8) ausgestanzt und aufeinandergeschichtet, um Pakete für Magnetkerne von elektrischen Maschinen zu bilden. Die identischen Lamellen 9 werden in dem gleichen Folgewerkzeug einseitig mit Vertiefungen 10 und auf der anderen Seite mit den Vertiefungen 10 übereinstimmenden und ihnen gegenüberliegenden Warzen 11 versehen. Beim Zusammenbau jedes Paketes werden mindestens zwei kreisrunde Warzen 11 in die entsprechenden Vertiefungen 10 eingepresst. Pro Paket wird jeweils eine Lamelle, die als Trennungslamelle 19 dient, anstelle mit Vertiefungen 10 mit zylindrischen Löchern 20 versehen. In diese Löcher 20 greifen dann die Warzen 11 der benachbarten Lamellen ein.

In der Fig. 8 sind die einzelnen Arbeitspositionen wie folgt durchnumeriert:

I — Lochstanzen (Mittelöffnung 12), II — Rotornutenstanzen (Nuten 13), III — gesteuertes Lochen, IV — Warzenprägen und V — Rotorausstanzen. Die Arbeitspositionen VI bis X entsprechen denjenigen I bis V, mit dem Unterschied, dass hier ein Stator hergestellt wird.

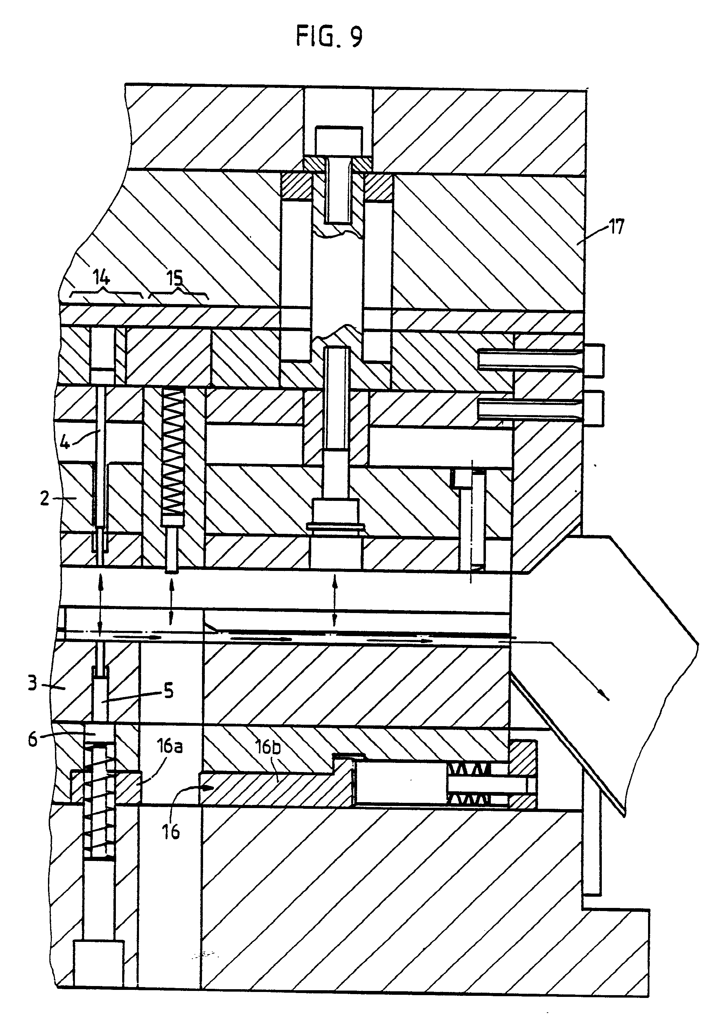

Die Vertiefungen 10 und die Warzen 11 jeder Lamelle 9 werden in dem Folgewerkzeug in der Prägestation 14 (Fig. 9) durch mindestens zwei Stempel 4 unter gleichzeitiger Gegenkrafteinwirkung von Gegenstempeln 5 fliessgeprägt. Der Vorgang des Fliessprägens ist am besten aus der Fig. 3 ersichtlich. Das Stanzband 1 wird zwischen einer Patrize 17 (Fig. 9) und einer Matrize 3 geführt. In der Prägestation 14 (Fig. 9) wird das Stanzband 1 mit grosser Kraft vom Niederhalter 2 auf die Matrize 3 gepresst und dann werden die Stempel 4 von der Patrize 17 durch den Niederhalter 2 in Richtung des Stanzbandes 1 geführt, wobei gleichzeitig die Gegenstempel 5 mit Gegenkraft auf das Stanzband 1 einwirken. Durch die Einwirkung der Stempel 4 werden im Stanzband 1 Vertiefungen 10 und Warzen 11 (Fig. 2) gebildet. Jeder Gegenstempel 5 ist mit einem Bund 6 versehen, der in der Endstellung des Gegenstempels an der Unterlage der Matrize 3 zum Anliegen kommt. Die Vertiefungen 10 und die Warzen 11 werden durch die Stempel 4 höchstens zehn Millisekunden weiter fliessgeprägt, nachdem die Gegenstempel 5 ihre Endstellung an der Unterlage 8 der Matrize 3 erreicht haben. Mit 7 ist eine Stützplatte für Matrize 3 bezeichnet. Die Gegenstempel 5 sind mit Federn 18 belastet ; es ist aber auch denkbar, dass die Gegenstempel in der Matrize hydraulisch höhenverstellbar sind.

Der Warzendurchmesser D wird grösser als derjenige d der entsprechenden Vertiefung 10 gebildet. Die Warzenhöhe H wird kleiner als die Tiefe t der entsprechenden Vertiefung 10 gebildet, wobei jede Vertiefung 10 mindestens 50 % der Lamellendicke a erreichen muss (siehe die Fig. 2).

Durch die Krafteinwirkung der Gegenstempel 5 während der Fliessprägung auf die Stirnflächen der Warzen 11 wird erreicht, dass dieselben flach gebildet werden, also nicht nach aussen bombiert, wie es der Fall bei dem Verfahren nach dem Stand der Technik ist. Durch die erzielten Ausmasse der Vertiefungen 10 und der Warzen 11 und durch die flachgebildeten Bodenflächen der Vertiefungen 10 und der Stirnflächen der Warzen 11 wird ein flaches Aufliegen der einzelnen Lamellen 9 aufeinander ohne Zwischenspalt erreicht. Auch die übliche Rissgefahr fällt bei dem erfindungsgemässen Fliessprägen weg.

Der Belastbarkeit der zur Herstellung von Vertiefungen 10 und Warzen 11 aktiven Werkzeugteile, insbesondere Stempel 4 und Gegenstempel 5, sind Grenzen gesetzt. Je nach den Werkstoffeigenschaften bzw. mechanischen Kennwerten des Stanzbandes 1 ist die erforderliche Verdünnung des Abstandes zwischen den Stirnflächen der Warzen 11 und den Bodenflächen der Vertiefungen 10 nicht erreichbar. In solchen Fällen wird das Stanzband 1 an den Sollstellen der Vertiefungen 10 und der Warzen 11 örtlich vorgeprägt (siehe Fig. 4). Eine weitere Möglichkeit besteht im örtlichen Vorlochen des Stanzbandes 1 an den Sollstellen der Vertiefungen 10 und der Warzen 11. Dabei wird ein zu jeder Warze 11 konzentrisches Loch vorgestanzt (siehe Fig. 5).

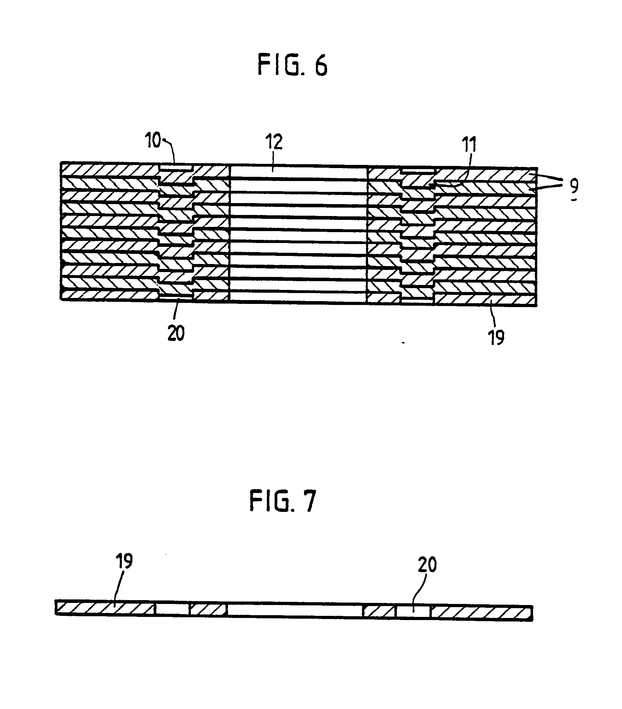

Das aus einzelnen aufeinandergeschichteten Blechlamellen 9 bestehende Rotorpaket ist in der Fig. 6 im Schnitt dargestellt. Die kreisrunden Warzen sind dabei in die Vertiefungen 10 der benachbarten Lamellen eingepresst. Die letzte Lamelle ist die Trennungslamelle 19, bei welcher anstelle der Vertiefungen zylindrische Löcher 20 gelocht wurden (siehe Fig. 7), in welche die Warzen der benachbarten Lamelle eingreifen. Das ganze Paket wird in den verschiedenen Arbeitsstationen eines einzigen Folgewerkzeuges hergestellt.

In der Fig. 9 sind im Schnitt die letzten zwei Arbeitsstationen eines einzigen Folgewerkzeuges dargestellt. In der Prägestation 14 ist ein Stempel 4 und ein Gegenstempel 5 mit Bund 6 sichtbar. In der letzten Ausschneidestation 15 des Folgewerkzeuges werden die fertigen Lamellen 9 ausgeschnitten. Unterhalb der Matrize 3 sind Bremselemente 16 eingebaut, die quer zu den Gegenstempelachsen verlaufen und den erforderlichen Widerstand bei der Verbindung der einzelnen fertigen Lamellen 9 untereinander leisten. Diese Bremselemente 16 umfassen zwei Bremsbacken, wovon die eine eine feste Bremsbacke 16a und die andere eine bewegliche, unter Federspannung stehende Bremsbacke 16b ist; durch ihre Gegeneinanderwirkung werden die ausgeschnittenen Lamellen 9 eingeklemmt. Das in der Fig. 9 dargestellte Folgewerkzeug ist für die Herstellung von Polschuhen bestimmt.

In diesem Verfahren und auf dieser Vorrichtung werden die Warzenstirnflächen und die Bodenflächen der Vertiefungen plan gebildet und die Abrundung an der Warzenperipherie und an der Eingangskante zur Vertiefung minimal gehalten. Dadurch wird ein flaches Anliegen der aufeinandergeschichteten Blechlamellen ohne Spalt erreicht. Weiterhin wird dadurch die axiale Verbindungskraft der Lamellen gross genug sein, um die Behandlung der Pakete bei der Weiterverarbeitung zu gewährleisten. Durch die Fliessprägung der Vertiefungen und der Warzen wird die übliche Rissbildung im Verformungsbereich vermieden.

## Patentansprüche

1. Verfahren zur Herstellung von aus aufeinandergeschichteten Blechlamellen bestehenden Paketen für Magnetkerne von elektrischen Maschinen, in welchem aus einem Band identische Lamellen ausgestanzt und einseitig mit Vertiefungen und auf der anderen Seite mit mit den Vertiefungen übereinstimmenden und ihnen gegenüberliegenden Erhebungen versehen werden, welche Erhebungen in Form von mindestens zwei kreisrunden Warzen beim Zusammenbau jedes Paketes in die Vertiefungen eingepresst werden, wobei bei einer Lamelle pro Paket, die als Trennungslamelle dient, anstelle der Vertiefungen zylindrische Löcher gelocht werden, in welche die Warzen der benachbarten Lamelle eingreifen, dadurch gekennzeichnet, dass die Vertiefungen (10) und die Warzen (11) jeder Lamelle (9) mittels Stempel (4) unter gleichzeitiger Gegenkrafteinwirkung von Gegenstempeln (5) fliessgeprägt werden, wobei der Warzendurchmesser (D) grösser als derjenige (d) der entsprechenden Vertiefung (10) und die Warzenhöhe (H) kleiner als die Tiefe (t) der entsprechenden Vertiefung (10), die mindestens fünfzig Prozent der Lamellendicke (a) erreicht hat, gebildet werden.

2. Verfahren nach Patentanspruch 1, dadurch gekennzeichnet, dass die Vertiefungen (10) und die Warzen (11) durch die Stempel (4) für höchstens zehn Millisekunden weiter fliessgeprägt werden, nachdem die Gegenstempel (5) ihre Endstellung erreicht haben.

3. Verfahren nach Patentanspruch 1, dadurch gekennzeichnet, dass der Warzendurchmesser (D) um höchstens zwanzig Mikron grösser als derjenige (d) der entsprechenden Vertiefung (10) und die Warzenhöhe (H) um höchstens 0,1 mm kleiner als die Tiefe (t) der entsprechenden Vertiefung (10) gebildet werden.

4. Verfahren nach Patentanspruch 1, dadurch gekennzeichnet, dass die Lamellen (9) an den Sollstellen der Vertiefungen (10) und der Warzen (11) vorgeprägt oder vorgelocht werden.

5. Vorrichtung zum Ausführen des Verfahrens nach Patentanspruch 1, bestehend aus einem Folgewerkzeug mit Patrize (17) und Matrize (3) und mit mehreren Arbeitsstationen, dadurch gekennzeichnet, dass in der Prägestation (14) der Vertiefungen (10) und der Warzen (11) mindestens zwei Stempel (4) und zwei in der Matrize (3) höhenverstellbare Gegenstempel (5) vorgesehen sind, dass jeder Gegenstempel (5) zum Festlegen seiner Endstellung an der Unterlage (8) der Matrize (3) mit einem Bund (6) versehen ist, und dass in der Ausschneidestation (15) der fertigen Lamellen (9) unterhalb der Matrize (3) Bremselemente (16) eingebaut sind, die quer zu den Gegenstempelachsen verlaufen und den erforderlichen Widerstand bei der Verbindung der einzelnen fertigen Lamellen (9) untereinander leisten.

## Claims

1. Process for manufacturing bundles consisting of stacked laminations for magnetic cores of electric machines, wherein indentical laminations are punched out of a strip and provided on one side with depressions and on the other side with elevations opposite to and matching the depressions, which elevations in the form of at least two circular nipples are pressed into the depressions during assembly of each bundle, cylindrical holes in which the nipples of the adjoining lamination engage being perforated instead of the depressions in one lamination, serving as a separating lamination, per bundle, characterized in that the depressions (10) and the nipples (11) of each lamination (9) are flow-embossed by means of punches (4) with simultaneous counterforce action of counterpunches (5), the nipple diameter (D) being formed greater than that (d) of the corresponding depression (10) and the nipple height (H) less than the depth (t) of the corresponding depression (10) which has reached at least fifty percent of the thickness (a) of the lamination.

2. Process according to patent claim 1, characterized in that the depressions (10) and the nipples (11) are further flow-embossed by the punches (4) for at most ten milliseconds after the counterpunches (5) have reached their end position.

3. Process according to patent claim 1, characterized in that the nipple diameter (D) is formed greater than that (d) of the corresponding depression (10) by at most twenty microns, and the nipple height (H) is formed less than the depth (t) of the corresponding depression (10) by at most 0.1 mm.

4. Process according to patent claim 1, characterized in that the laminations (9) are pre-embossed or pre-perforated at the predetermined locations of the depressions (10) and the nipples (11).

5. Device for carrying out the process according to patent claim 1, consisting of a follow-on tool having a top die (17) and a bottom die (3) and having a plurality of work stations, characterized in that in the embossing station (14) of the depressions (10) and of the nipples (11) at least two punches (4) and two counterpunches (5) vertically adjustable in the bottom die (3) are provided, that each counterpunch (5) is provided with a collar (6) for determining its end position against the base plate (8) of the bottom die (3), and that in the cutting-out station (15) of the finished laminations (9), braking elements (16) are incorporated beneath the bottom die (3) which run at right angles to the axes of the counterpunches and furnish the necessary resistance during interconnection of the individual finished laminations (9).

## Revendications

1. Procédé pour la fabrication d'assemblages constitués de lames de tôle empilées, pour noyaux magnétiques dans des machines électriques, selon lequel des lames identiques sont découpées dans une bande et sont pourvues de creusures faites d'un côté et d'excroissances faites de l'autre côté, ces excroissances correspondant aux creusures, étant opposées à ces dernières et comportant au moins deux tétons circulaires qui sont pressés dans des creusures lors de la formation de l'assemblage, chaque assemblage comportant une lame marginale qui présente au lieu des creusures des trous cylindriques dans lesquels les tétons de la lame voisine pénètrent, caractérisé en ce que les creusures (10) et les tétons (11) de chaque lame (9) sont formés par étampage-fluage au moyen de poinçons (4) agissant à l'encontre de contre-poinçons (5), le diamètre des tétons (D) étant supérieur à celui (d) des creusures correspondantes (10), tandis que la hauteur (H) des tétons est inférieure à la profondeur (t) des creusures (10) correspondantes, la dite profondeur atteignant au moins 50 % de l'épaisseur (a) de la lame.

2. Procédé selon la revendication 1, caractérisé en ce que les creusures (10) et les tétons (11) sont soumis par les poinçons (4) à l'opération d'étampage-fluage pendant au plus 10 millisecondes après que les contre-poinçons (5) ont atteint leur position finale.

3. Procédé selon la revendication 1, caractérisé en ce qu'on donne au diamètre (D) des tétons une valeur supérieure d'au plus 20 microns, au diamètre (d) de la creusure (10) correspondante, la hauteur (H) des tétons ayant une valeur inférieure d'au plus 0,1 mm à la profondeur (t) de la creusure correspondante.

4. Procédé selon la revendication 1, caractérisé en ce que les lames (9) sont soumises à une opération de pré-étampage ou de pré-perçage aux emplacements destinés à présenter les creusures (10) et les tétons (11).

5. Dispositif pour la mise en œuvre du procédé selon la revendication 1, ce composant d'un outillage à action progressive, avec porte-poinçon (17) et matrice (3), et comprenant plusieurs stations de travail, caractérisé en ce que dans la station d'étampage (14) des creusures (10) et des tétons (11), sont disposés des contre-poinçons (5) réglables en hauteur, en ce que chaque contre-poinçon (5) comporte un épaulement (6) permettant de fixer sa position finale par rapport au socle (8) de la matrice (3), et en ce que dans la station de sectionnement (15) des lames terminées (9), des éléments de freinage (16) sont disposés sous la matrice (3), ces éléments étant orientés transversalement par rapport aux axes des contre-poinçons et produisant la force de résistance nécessaire lors de la réunion des différentes lames (9) entre elles.

FIG. 1

FIG. 2

FIG. 3

FIG. 4

FIG. 5

## FIG. 6

## FIG. 7

# FIG. 8

I  II  III  IV  V

VI  VII  VIII  IX  X

0 133 858

## FIG. 9